# EUROPÄISCHE PATENTSCHRIFT

(11) **EP 2 546 051 B1**
(45) Veröffentlichungstag und Bekanntmachung des Hinweises auf die Patenterteilung: **16.09.2015**
(21) Anmeldenummer: 12171595.7
(22) Anmeldetag: 12.06.2012
(51) Int. Cl.: B29D 30/72, B60C 13/00

(54) **Vulkanette**
Rubber label
Etiquette en caoutchouc

(30) Priorität: 15.07.2011 DE 102011051856
(43) Veröffentlichungstag der Anmeldung: 16.01.2013
(73) Patentinhaber: Continental Reifen Deutschland GmbH, 30165 Hannover (DE)
(72) Erfinder: Gerhardt, Joachim, 30890 Barsinghausen (DE)
(74) Vertreter: Finger, Karsten

(56) Entgegenhaltungen:
- EP-A1- 1 067 389
- DE-A1-102007 028 192
- DE-A1-102009 044 800
- US-A- 3 750 120

## Beschreibung

Die Erfindung betrifft eine Vulkanette für einen Fahrzeugreifen, wobei die Vulkanette auf der Formfläche der Seitenwandschale einer Vulkanisierform lösbar anzuordnen ist, so dass die Vulkanette beim Einformen des Reifenrohlings auf der Formfläche fixierbar ist und so dass die Vulkanette während des Vulkanisiervorganges auf die Seitenwand des zu vulkanisierenden Reifens vulkanisierbar und von der Formfläche lösbar ist.

Die Seitenwand von Fahrzeugreifen, insbesondere von Fahrzeugluftreifen, weist Bezeichnungen auf. Diese Bezeichnungen sollen von hoher Fertigungsqualität sein, eine hohe Qualitätsanmutung des Reifens erzeugen sowie diesen gegenüber anderen Reifen optisch hervorheben. Dieses wird z.B. durch das Aufbringen von Vulkanetten auf die Reifenseitenwand erreicht.

Als Werkstoffe der Vulkanetten kommen beispielsweise Elastomere, thermoplastische Elastomere, Kunststoffe oder Kombinationen im schichtweisen Aufbau aus Elastomeren und bedruckten Kunststoffen in Frage. Den gestanzten Vulkanetten kommt eine herausragende Bedeutung zu.

"Bezeichnungen" umfassen dabei Firmennamen, Firmenlogos, Farbkennzeichnungen, Informationsdaten, Identifikationscodes, Schraffuren etc..

Aus der EP-A-1 625 952 ist es bekannt, die Reifenseitenwand mit Vulkanetten zu versehen. Die Vulkanetten weisen eine Stärke von etwa 1 mm auf und sind durch auf die Seitenwand des Reifens vulkanisierte Gummifolien gebildet. Der Folienstärkebereich bewegt sich zumeist zwischen 0,1 und 1,5 mm. Die Vulkanetten werden durch Einwirkung von Druck und Wärme auf den zu kennzeichnenden Reifen gepresst und härten oder vulkanisieren an bzw. auf dem Reifen aus. Die Vulkanetten tragen in der Regel farbige, aufgedruckte Schriften, Zeichen, Logos, technische Informationen, Markennamen oder dergleichen.

Aus der US 3 750 120 A ist es bekannt, einen Reifen oder einen Teil des Reifens aus einer Kautschukmischung zu fertigen, in welche magnetisierbares Material eingemischt ist. Zu einem beliebigen Zeitpunkt der Reifenproduktion soll ein digitaler Code in diesem magnetisierbaren Material magnetisch aufzuzeichnen und auszulesen sein.

Aus der EP 1 067 389 A1 ist es für Messungen des dynamischen Verhaltens von Reifen bekannt, die Reifenseitenwand umlaufend mit einem magnetisierbaren Band zu versehen, wobei das über die Seitenwand umlaufende Band in magnetisierte Abschnitte unterteilt ist.

Um Vulkanetten auf die Reifenseitenwand zu vulkanisieren sind u.a. die beiden folgenden Vorgehensweisen bekannt: Einerseits kann die Vulkanette auf der Formfläche der Vulkanisierform platziert werden und während des Einformens und Heizpressens des Reifenrohlings auf diesen übertragen und anschließend gemeinsam mit dem Reifen auf dessen Seitenwand vulkanisiert werden. Andererseits kann die Vulkanette direkt auf den Reifenrohling aufgebracht werden, welcher anschließend in die Vulkanisierform überführt und vulkanisiert wird.

Problematisch ist es, die Vulkanette an bzw. auf der Seitenwandschale der Vulkanisierform lösbar anzuordnen. Übliche Vulkanisierformen sind derart orientiert, dass die Achse des heizzupressenden Reifens vertikal verläuft. Die das Reifenprofil pressenden Segmente sind in einer horizontalen Ebene angeordnet, während die beiden Seitenwandschalen "vertikal unten" und "vertikal oben" angeordnet sind. Dabei weist die Formfläche der unteren Seitenwandschale nach oben, während die Formfläche der oberen Seitenwandschale zur Bildung des Formenhohlraumes Richtung Boden weist.

Problematisch ist nun, die Vulkanette derart an der Seitenwandschale anzuordnen, dass diese während des Einformvorganges sicher vor Verrutschen bzw. sicher vor Ablösung von der Seitenwandschale ist. Es ist bekannt, Vulkanetten auf die untere Seitenwandschale aufzulegen, beispielsweise in entsprechende Aussparungen oder Fixierungen in der Formfläche, und den Rohling anschließend in die Vulkanisierform einzubringen. Auf der oberen Seitenwandschale halten Vulkanetten schwerkraftsbedingt nicht, ohne weitere aufwändige Maßnahmen vorzusehen. Dabei ist es beispielsweise gerade bei Motorradreifen, bei denen im am Fahrzeug montierten Zustand beide Seitenwände sichtbar sind, erwünscht, beidseitig auf den Seitenwänden Vulkanetten anzuordnen. Auch bei asymmetrischen PKW- oder LKW-Reifen ist es erwünscht, beidseitig Vulkanetten auf den Reifenseitenwänden anzuordnen, um auf allen vier Radpositionen am Fahrzeug die Beschriftung der Vulkanette sichtbar zu erhalten.

Es ist ebenfalls bekannt, Vulkanetten mittels einer Klebeschicht auf dem Reifenrohling zu positionieren und diese dann in einer Heizform gemeinsam mit dem Rohling zu vulkanisieren. Vorteilhaft ist, dass der Reifenrohling ein- oder beidseitig mit Vulkanetten bestückt werden kann. Nachteilig jedoch ist, dass die Vulkanette nicht exakt plazierbar ist und die Gefahr von Verrutschungen besteht, während der die Vulkanetten tragende Reifenrohling in die Heizform überführt wird.

Es ist die Aufgabe der Erfindung, eine alternative Vulkanette zur Verfügung zu stellen, welche während des Vulkanisationsvorganges des Reifens mit diesem verbunden wird und mit der die Seitenwände des Reifens auch beidseitig bestückt werden kann.

Gelöst wird die Aufgabe, indem die Vulkanette derart ausgeführt ist, dassdie Vulkanette mehrschichtig aufgebaut ist, wobei eine Schicht magnetisch ausgeführt ist, so dass die Vulkanette mittels magnetischer Kräfte auf der Seitenwandschale lösbar anzuordnen ist.

Erfindungsgemäß ist vorgesehen, die Vulkanette mittels magnetischer Kräfte an der Seitenwandschale der Vulkanisierform lösbar anzuordnen. Es ist ermöglicht, die Vulkanette an der unteren und/oder an der oberen Seitenwandschale mittels der magnetischen Kräfte sicher zu platzieren. Es ist keine aufwändige Fixierung o Aussparung an der Vulkansisierform zur Halterung der Vulkanette notwendig. Während des Einformvorganges kommt die Vulkanette mit der Seitenwand des Reifenrohlings in Kontakt, während des Heizvorganges wird die Vulkanette mit der Seitenwand des Rohlings verbunden. Durch die Temperaturen während des Heizvorganges verliert der Magnet seine magnetische Eigenschaft. Der fertige Reifen kann entformt werden. Die Vulkanette ist sicher auf einer oder auf beiden Seitenwänden des Reifens anzuordnen. Die Vulkanette ist magnetisch ausgeführt. Vulkanisierformen, insbesondere die Seitenwandschalen bestehen üblicherweise aus Stahl, so dass die als Magnet wirkende Vulkanette ohne aufwändige Maßnahmen an der Vulkanisierform einsetzbar ist.

Die Vulkanette ist mehrschichtig aufgebaut, wobei eine Schicht magnetisch ausgeführt ist. Vulkanetten weisen üblicherweise einen mehrschichtigen Aufbau auf, so dass eine als Magnet wirkende Schicht einfach und kostengünstig mit eingebracht werden kann.

Vorteilhaft ist es, wenn die Vulkanette derart gestaltet ist, dass diese durch Fixierungen, welche an der Seitenwandschale der Vulkanisierform angeordnet sind, zusätzlich in ihrer Position auf der Seitenwandschale fixierbar ist. Diese Fixierungen an bzw. in der Seitenwandschale der Vulkanisierform können beispielsweise ein Bett für die Vulkanette oder Haltepins sein, die in korrespondierende Aussparungen der Vulkanette eingreifen. Somit ist eine exakte Positionierung der Vulkanette auf der Seitenwandschale sichergestellt.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine Aufsicht auf eine Seitenwandschale einer Vulkanisierform eines PKW-Fahrzeugluftreifens;
Fig.2 einen Querschnitt durch eine erfindungsgemäße Vulkanette.

Vulkanisierformen für Fahrzeugreifen bestehen aus einer Vielzahl von Formteilen. Jene Formteile, die mit dem vorerst noch unvulkanisierten Reifenrohling in Kontakt treten, müssen derart aufgebaut, angeordnet und bewegbar sein, dass der Rohreifen eingebracht und der fertig vulkanisierte Reifen entnommen werden kann. Häufig sind radial verfahrbare Vulkanisierformen im Einsatz, bei denen eine Anzahl von ringartig angeordneten Formsegmenten vorgesehen sind, welche den Reifen im Bereich des Laufstreifens und der Schultern formen und die vorgesehene Profilierung über Stege, Lamellen und dergleichen in den Laufstreifen eindrücken. Üblicherweise sind sechs bis acht in radialer Richtung bewegbare Formsegmente in einer Vulkanisierform für PKW-Reifen vorgesehen. In axialer Richtung bewegbar angeordnete Seitenwandschalen 1 kontaktieren mit kreisringartig umlaufenden Formflächen 6 den zu vulkanisierenden Reifen im Bereich seiner Seitenwände und übertragen auf diese die Bezeichnungen der Seitenwand wie beispielsweise das Seitenwanddesign, den Markennamen und die Dimensionsangaben.

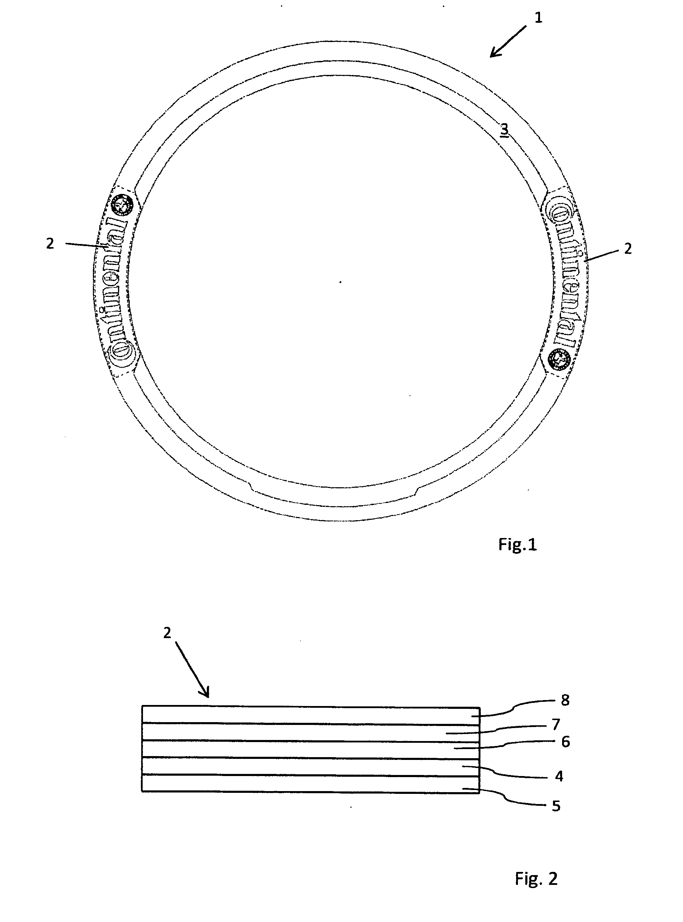

Die Seitenwandschale 1 der Fig.1 zeigt zwei auf ihrer Formfläche 3 angeordnete Vulkanetten 2. Üblicherweise ist eine Vulkanette 2 derart auf der Formfläche 3 angeordnet, dass deren beschriftete Seite Richtung Formfläche weist. Hier weist, zur Verdeutlchung der Darstellung, die beschriftete Seite der Vulkanette 2 von der Formfläche 3 weg. Die Seitenwandschale 1 besteht aus Stahl. Die Vulkanetten 2 sind magnetisch ausgeführt und somit auf dieser Formfläche 3 mittels magnetischer Kräfte lösbar angeordnet. Die Vulkanetten 2 sind beim Einformen des Reifenrohlings auf der Formfläche 3 der Seitenwandschale 1 mittels magnetischer Kräfte fixiert und sind während des Vulkanisiervorganges auf die Seitenwand des zu vulkanisierenden Reifens übertragbar und von der Formfläche 2 lösbar.

Die Fig. 2 zeigt einen Querschnitt durch eine erfindungsgemäße Vulkanette 2. Die Vulkanette 2 weist einen mehrschichtigen, sandwichartigen Aufbau aus den Schichten 4, 5, 6, 7, 8 auf. Die unterste Schicht 5 ist diejenige Schicht, die auf den Reifenrohling aufgebracht wird und besteht aus einer vorvernetzten Kautschukmischung. Darüber folgt die magnetische Schicht 4, welche von einer Sperrschicht 6 abgedeckt wird. Oberhalb der Sperrschicht 6 ist die den Druck tragende Schicht 7 angeordnet, welche wiederum durch eine Schutzschicht 8, zumeist eine Abdeckfolie, welche nach dem Heizvorgang des Fahrzeugreifens entfernt wird.

### Bezugszeichenliste

### (Teil der Beschreibung)

- 1: Seitenwandschale
- 2: Vulkanette
- 3: Formfläche
- 4: Magnetische Schicht
- 5: vorvernetzte Kautschukschicht
- 6: Sperrschicht
- 7: Druckschicht
- 8: Schutzschicht

## Patentansprüche

1. Vulkanette (2) für einen Fahrzeugreifen, wobei die Vulkanette (2) auf der Formfläche (3) der Seitenwandschale (1) einer Vulkanisierform lösbar anzuordnen ist, so dass die Vulkanette (2) beim Einformen des Reifenrohlings auf der Formfläche (3) fixierbar ist und so dass die Vulkanette (2) während des Vulkanisiervorganges auf die Seitenwand des zu vulkanisierenden Reifens vulkanisierbar und von der Formfläche (3) lösbar ist, **dadurch gekennzeichnet, dass** die Vulkanette (2) mehrschichtig aufgebaut ist, wobei eine Schicht (4) magnetisch ausgeführt ist, so dass die Vulkanette (2) mittels magnetischer Kräfte auf der Seitenwandschale (1) lösbar anzuordnen ist.

2. Vulkanette nach Anspruch 1, **dadurch gekennzeichnet, dass** die Vulkanette derart gestaltet ist, dass diese durch Fixierungen, welche an der Seitenwandschale der Vulkanisierform angeordnet sind, zusätzlich in ihrer Position auf der Seitenwandschale fixierbar ist.

## Claims

1. Rubber label (2) for a vehicle tyre, wherein the rubber label (2) can be detachably arranged on the moulded surface (3) of the side wall shell (1) of a vulcanizing mould, with the result that the rubber label (2) can be secured to the moulded surface (3) during the moulding of the tyre blank, and with the result that during the vulcanization process the rubber label (2) can be vulcanized onto the side wall of the tyre which is to be vulcanized, and can be detached from the moulded surface (3), **characterized in that** the rubber label (2) is constructed in multiple layers, wherein one layer (4) is embodied in a magnetic fashion with the result that the rubber label (2) can be detachably arranged to the side wall shell (1) by means of magnetic forces.

2. Rubber label according to Claim 1, **characterized in that** the rubber label is configured in such a way that said rubber label can be additionally secured in its position on the side wall shell by securing means which are arranged on the side wall shell of the vulcanizing mould.

## Revendications

1. Etiquette en caoutchouc (2) pour un pneu de véhicule, l'étiquette en caoutchouc (2) devant être disposée de manière amovible sur la surface du moule (3) de la coque de paroi latérale (1) d'un moule de vulcanisation de telle sorte que l'étiquette en caoutchouc (2), lors du formage de l'ébauche de pneu, puisse être fixée sur la surface du moule (3) et de telle sorte que l'étiquette en caoutchouc (2), pendant l'opération de vulcanisation, puisse être vulcanisée sur la paroi latérale du pneu à vulcaniser et puisse être détachée de la surface du moule (3), **caractérisée en ce que** l'étiquette en caoutchouc (2) est construite en plusieurs couches, une couche (4) étant réalisée sous forme magnétique de telle sorte que l'étiquette vulcanisée (2) puisse être disposée de manière amovible au moyen de forces magnétiques sur la coque de paroi latérale (1).

2. Etiquette en caoutchouc selon la revendication 1, **caractérisée en ce que** l'étiquette en caoutchouc est configurée de telle sorte que celle-ci puisse de plus être fixée en position sur la coque de paroi latérale par des fixations disposées sur la coque de paroi latérale du moule de vulcanisation.
